# EUROPEAN PATENT SPECIFICATION

(11) **EP 1 273 635 B1**
(45) Date of publication and mention of the grant of the patent: **14.11.2007**
(21) Application number: 02254557.8
(22) Date of filing: 28.06.2002
(51) Int. Cl.: C09D 5/00, B05D 7/00

(54) **Water resistant polymer network compositions**
Wasserbeständige Polymernetzwerk-Zusammensetzungen
Composition des réseaux polymère résistant à l'eau

(30) Priority: 02.07.2001 US 302580 P
(43) Date of publication of application: 08.01.2003
(73) Proprietor: ROHM AND HAAS COMPANY, Philadelphia, Pennsylvania 19106-2399 (US)
(72) Inventor: Baxter, Steven M., Chalfont, Pennsylvania 18914 (US); El A'mma, Anton G., Perkiomenville, Pennsylvania 18094 (US); Kim, Jung A., Wyncote, Pennsylvania 19095 (US); Lau, Willie,, Lower Gwynedd, Pennsylvania 19002 (US); Schwartz, Curtis,, Ambler, Pennsylvania 19002 (US); Tepe, Thomas R., King of Prussia, Pennsylvania 19406 (US)
(74) Representative: Kent, Venetia Katherine

(56) References cited:
- EP-A- 0 617 051
- EP-A- 1 166 771
- WO-A-00/32639
- DE-A- 2 404 046

## Description

The present invention relates to water resistant compositions containing polymers that are dispersed in an oil based system which aids the retention of active components. More particularly, the invention relates to water resistant polymers dispersed in oil based coatings which aid in the retention of active components at low polymer concentrations. As a result, the active components in such coatings remain efficacious on surfaces exposed to water, high humidity or other oxidizing environments.

The oxidizing effects of sunlight and the growth of microorganisms on surfaces, both enhanced in the presence of aqueous systems, are well established and documented. Protecting surfaces against prolonged exposure to sunlight, microorganisms and the need to maintain water resistance present continuing problems which are multi-fold and interrelated: effective delivery and surface coverage of a coating composition containing one or more active components, substantivity of the composition on a surface over extended periods of time and exposure to aqueous environments that cause the coating to wash off or wear off and exposure to mechanical stresses that cause the coating to rub off. The inability to effectively control one particular aspect of the problem often influences the ability to effectively control the remaining aspects. Polymer based coatings, wherein the polymer aids in retaining active ingredients at low polymer concentrations, that possess high viscosities under relatively low shear stresses related to application of the coating on surfaces would therefore be of significant utility. To be most effective, it is required that the coatings are applied to surfaces as tough, continuous films. However, delivering such films to a particular surface is difficult, maintaining the film on the surface over extended time periods has yet to be adequately addressed, and retaining the active component in the coating remains one of the most challenging aspects of the art.

Water proof coatings containing film forming polymers that form a tough, continuous film on a surface typically can not tolerate large amounts of oil and other organic compounds which tend to overplasticize the films. As a result, the compositions are applied as solutions from one or more solvents which are difficult to apply evenly and the resulting deposited films provide poor wet abrasion resistance. Polymers incorporating an active component which are dispersed in an oil base have inherent limitations regarding the retention of the active component at low polymer concentrations in the coating composition. Moreover, the resulting coatings are not substantive when applied to surfaces exposed to water, high humidity or other corrosive environments and mechanical stresses such as periodic re-application of the coating composition.

European Patent No. EP 0 757 108 B1 discloses a method for waterproofing leather by treating the leather with an aqueous dispersion of silicone oil emulsified with a water-insoluble amphiphilic copolymer, the copolymer formed from 50 to 90 weight percent of at least one hydrophobic monomer and from 10 to 50 weight percent at least one hydrophilic monomer. A major requirement of the copolymer is that the weight average molecular weight ranges from 2000 to 100,000, the ratio of silicone oil to amphiphilic polymer by weight is from 1:5 to 8:1 and the aqueous dispersion of silicone oil must be emulsified with the water-insoluble copolymer. Emulsification is necessary to deliver the active component (silicone oil) to the surface of the leather, since the structures of water-insoluble acrylate copolymers provide no means to entrap or retain active ingredients. U. S. Patent No. 6,228,354 B1 discloses an aqueous solution comprising a polyvinyl lactam, a broad spectrum antimicrobial agent complexed to the lactam, a water resistant polymer including octylacrylamide and alcohol for use as a water resistant film-forming skin preparation WO 00/32639 discloses a method for preparing a composition in the form of an invert latex, comprising an oil phase, an aqueous phase, at least an emulsifiers of the type water-in-oil (W/O), at least an emulsifier of the type oil-in-water (O/W), from 20 to 75 wt. %, mainly from 20 to 60 wt. % and more particularly from 30 to 45 wt. %, of a branched or crosslinked anionic polyelectrolyte. EP 1 166 771 discloses a self-inverting inverted latex composition comprising an oil phase, an aqueous phase, oil-in-water emulsifier(s), water-in-oil-emulsifier(s) and 20-70 (preferably 25-60) wt. % branched or crosslinked polyelectrolyte, the polyelectrolyte is a polymer (I) and the solvent of the oil phase is a fatty acid ester (II). DE 24 04 046 discloses skin-care or protection agents comprising a poly carboxylate/hydroxy polymer wherein the ratio of carboxyl or carboxylate groups to hydroxyl groups is greater than 0.5:1. The polymers can be prepared by the oxidative polymerisation of acrolein and acrylic acid and reaction with formaldehyde either subsequently or simultaneously. EP 0 617 051 discloses controlled release of a fragrance can be provided by incorporating it during emulsion polymerisation of water insoluble monomeric material in which it is dissolved and which is based primarily on alkyl (meth) acrylates alone or with styrenes, and by appropriate choice of the monomer blend and the Tg of the resultant polymer the rate of release of the fragrance can be selected. Polymers having functional network structures to effect the retention of one or more active ingredients in oil based coatings at low polymer concentrations and that remain substantially resistant to aqueous environments, surfactants and mechanical stresses would, therefore, be of great utility in coating compositions. It would be of great advantage to have a composition which aids in the retention of active ingredients at low polymer concentrations and which remains efficacious on hard surfaces such as metals, plastic objects and ceramics as well as pliable and flexible surfaces such as plastic films, leather and skin. The inventors have discovered a class of polymer compositions that are effective in retaining active ingredients dispersed in an oil phase at low polymer concentrations and that exhibit surprisingly high oil phase viscosities under relatively low shear stresses. These polymers are prepared by polymerization of one or more monomers having low water solubilities and one or more associative agents. Incorporation of associative agents provides polymers having functional network structures that retain active ingredients at low polymer concentrations when dispersed in a oil phase. Coatings prepared from the water resistant, active retaining polymers remain substantive when applied to a variety of surfaces exposed to specific aqueous environments and mechanical stresses. When dispersed in an oil phase, the polymers have network structures which, effectively entrap, swell and retain active ingredients in a coating. Coatings including one or more network polymers and active ingredients in an acceptable oil base, form mechanically strong, continuous films on surfaces. The films adhere to the surfaces and have superior rheological properties related to their resistance to mechanical shear stresses including for example periodic re-application of the coating, exposure to aqueous environments, exposure or contact with other surfaces and movements associated with surfaces during use. The nature of the monomers used to prepare the polymeric coatings also provide a substantial water proofing effect to surfaces as well as a sequestering matrix or controlled release matrix for the active components present in the coating. In addition, the inventors have discovered that coatings incorporating the polymers provide substantial waterproofing effects while remaining substantive on surfaces exposed to aqueous environments.

The present invention, in its various aspects, is as set out in the accompanying claims.

A first aspect of the present invention provides a water resistant, coating composition comprising:
(A) 0.01 to 10% by weight, based on the total weight of the composition of one or more active components selected from the group consisting of ultraviolet light-absorbing materials, fragrances, lubricants, corrosion inhibitors, silicones, plasticizers, rheology mod ifiers, surfactants, surfactant scavengers, sag resistors, pharmaceutical agents, antibacterial agents, insecticides, antifungal agents, antioxidants, waterproofing oils, silicones, triglycerides, thickeners, fabric care actives, inks, agricultural chemicals, fungicides, pesticides and combinations thereof;
(B) one or more acceptable additives selected from fillers, dyes, colorants, preservatives, biocides and combinations thereof;
(C) an oil phase ; and
(D) one or more polymers having a network structure and comprising
   a) 0.1 to 5% by weight of polymerized residues of (meth)acrylic acid;
   b) 15 to 75% by weight of polymerized residues of a monomer selected from one or more C₄-C₈ alkyl (meth)acrylates;
   c) 25 to 75% by weight of polymerized residues of a monomer selected from one or more C₉-C₅₀ alkyl (methacrylates; and
   d) 0.01 to 90% by weight of one or more associative agents,
the polymer dispersing in the oil phase in an amount from 0.01 to 10% by weight based on the total weight of the composition,
and wherein the associative agents are selected from the group consisting of allyl (meth)acrylate, ethylene glycol di(meth)acrylate, butylene glycol di(meth)acrylate, methylenebisacrylamide, pentaerythritol diacrylate, pentaerythritol triacrylate, pentaerythritol tetraacrylate, divinylbenzene, polyethylene glycol diacrylate, bisphenol A diacrylates and combinations thereof;
and wherein the oil phase viscosity of the composition is at least 10 poise under a shear stress up to 1000 dynes / cm². Optionally, the composition comprises an oil-in-water emulsion.

A second aspect of the present invention provides a process for retaining an active component in a coating composition comprising;
(i) adding a mixture comprising
   a) 0.1 to 5% by weight of polymerized residues of (meth)acrylic acid;
   b) 15 to 75% by weight of polymerized residues of a monomer selected from one or more C₄-C₈ alkyl (meth)acrylates;
   c) 25 to 75% by weight of polymerized residues of a monomer selected from one or more C₉-C₅₀ alkyl (meth)acrylates; and
   d) 0.01 to 90% by weight of one or more associative agents, sand wherein the associative agents are selected from the group consisting of allyl (meth)acrylate, ethylene glycol di(meth)acrylate, butylene glycol di(meth)acrylate, methylenebisacrylamide, pentaerythritol diacrylate, pentaerythritol triacrylate, pentaerythritol tetraacrylate, divinylbenzene, polyethylene glycol diacrylate, bisphenol A diacrylates and combinations thereof,
   and polymerizing the mixture to form a polymer having a network structure; and
(ii) combining the polymer and 0.01 to 10% by weight, based on the total weighty of the composition of one or more active components selected from the group consisting of ultraviolet light-absorbing materials, fragrances, lubricants, corrosion inhibitors, silicones, plasticizers, rheology modifiers, surfactants, surfactant scavengers, sag resistors, pharmaceutical agents, biocides, antibacterial agents, insecticides, antifungal agents, antioxidants, waterproofing oils, silicones, triglycerides, dyes, colorants, thickeners, fabric care actives, inks, agricultural chemicals, fungicides, pesticides and combinations thereof in an oil phase; wherein the polymer is dispersed in the oil phase in an amount from 0.01 to 10% by weight based on the total weight of the composition;
wherein the oil phase viscosity of the composition is at least 10 poise under a shear stress up to 1000 dynes / cm².

Alternatively, the associative agent is added after polymerization. An alternative process comprises the polymerization of one or more monomers having low water solubility, at least one monomer having one or more associative agents as functional groups reacting during polymerization to provide a polymer having a network structure. Optionally, the process comprises adding one or more reagents to the polymer after polymerization, the reagents reacting with the functional groups to provide a polymer having a network structure.

A third aspect of the present invention provides a coating of the first aspect when applied to surfaces selected from the group consisting of metals, plastics, concrete, ceramics, glass, wood, leather products, mammalian skin, plastic films, trees, plants, textiles, paper, cardboard, roofing, siding, caulks, paints, sealants, architectural coatings and combinations thereof.

Accordingly, in a first aspect of the present invention there is provided a coating composition which aids in retaining one or more active ingredients present in an oil phase. The composition includes at least one polymer having a functional network structure, the polymer comprising one or more associative agents which impart to the polymer a network structure. When dispersed with one or more active ingredients in an oil phase, the polymer effectively retains active ingredients at polymer amounts between 0.01 to 10% by weight based on the total weight of the composition. Preferably, active retaining polymers are prepared by combining one or more monomers having low or very low water solubility with one or more associative agents during polymerization of the monomers. Optionally, the process comprises adding one or more reagents to the polymer after polymerization, the reagents reacting with the functional groups to provide a polymer having a network structure.

As used herein, the term "water soluble" or "having water solubility" means completely soluble in water. The term "having low water solubility" means having a water solubility at 25°-50°C of no greater than 200 millimoles/liter; the term "having very low water solubility" means having a water solubility at 25°-50°C of no greater than 50 millimoles/liter. The term "active retaining composition" refers to a composition including one more polymers having a functional network structure which effectively retains active ingredients. The term "active retaining polymer" refers to a polymer prepared from one or more monomers having low or very low water solubility including at least one associative agent during or after polymerization to provide a polymer having a functional network structure which effectively retains active ingredients. An alternative yet equivalent meaning of the term "active retaining polymer" refers to the polymerization of one or more monomers having low or very low water solubility, wherein one or more of the monomers includes one or more types of associative agents in addition to an ethylenically unsaturated functional group or includes at least one type of functional group in addition to an ethylenically unsaturated functional group that can react as an associative agent during or after polymerization of the monomers, providing a polymer having a functional structure network structure which effectively retains active ingredients. An alternative yet equivalent meaning for the term "active retaining polymer" refers to a polymer dispersed in an oil phase that is capable of retaining one or more active ingredients, the polymer present in an amount from 0.01 to 10% by weight based on the total weight of the polymer, active(s) and any other ingredients, the active retaining polymer having an oil phase viscosity of at least 10 poise under a shear stress up to 1000 dynes / cm². The term "network structure" refers to a polymer structure that entraps, entangles or sequesters active components while remaining dispersed or soluble in an oil phase. This may occur via physical polymer dynamics including for example swelling, chain entrapment, chain ordering via side chains having substantial crystalline phases, large number of carbon atoms or entanglement of active components and portions of the polymer chain having hydrophobic character. An alternative meaning for the term "network structure" refers to a polymer structure resulting from chemical reactions or physical interactions of functional groups incorporated in the polymer via monomer functionalized associative agents and one or more additional reagents. The term "network structure" refers as well to the rheology of such polymers in the oil phase under relatively low shear stress as compared to polymers having no network structure, vida infra.

Monomers having low water solubility and usefully employed in the invention for preparing water resistant polymers having network structures include, but are not limited to, α,β-ethylenically unsaturated monomers. Suitable monomers include for example primary alkenes, α-olefins such as 1-butene, 1-octene, 1-decene; styrene and alkyl substituted styrenes such as α-methylstyrene and vinyltoluene; vinyl esters of C₄-C₃₀ carboxylic acids such as vinyl 2-ethylhexanoate, vinyl neodecanoate; vinyl chloride; vinylidene chloride; N-alkyl substituted (meth)acrylamides such as octylacrylamide and maleic acid amide; vinyl alkyl or aryl ethers with (C₃-C₃₀) alkyl groups such as stearyl vinyl ether; (C₁-C₃₀) alkyl esters of (meth)acrylic acid, such as methyl methacrylate (MMA), ethyl (meth)acrylate, butyl (meth)acrylate, 2-ethylhexyl (meth)acrylate, benzyl (meth)acrylate, lauryl (meth)acrylate, oleyl (meth)acrylate, palmityl (meth)acrylate, stearyl (meth)acrylate, cetyl (meth)acrylate, behenyl (meth)acrylate, eicosyl (meth)acrylate; blends such as cetyl-eicosyl (meth)acrylate; unsaturated vinyl esters of (meth)acrylic acid such as those derived from fatty acids and fatty alcohols; vinyl esters; vinyl ethers; vinyl amides; vinyl urethanes; olefins; cyclic anhydrides; mono and diesters of cyclic anhydrides; allyl containing monomers; multifunctional monomers such as pentaerythritol triacrylate; monomers derived from cholesterol; surfactant monomers including long chain alkoxy- or alkylphenoxy-poly(alkylene oxide) (meth)acrylates, such as C₁₈H₂₇-(ethylene oxide)₁₀₋₄₀-(meth)acrylate and C₁₂H₂₅-(ethylene oxide) ₁₀₋₃₀ - (meth)acrylate and the like.

Monomers having low water solubility (as referred to as hydrophobic monomers) may also contain functional groups such as for example carboxyl, hydroxy, amino, amido, aldehyde, epoxy, acetoacetoxy, cyano, cyanato, isocyanato, branched alkyl, straight chain alkyl, aromatics and substituted aromatics, discotic aromatic groups with or without carbon containing spacer groups, polyether, groups exhibiting crystalline or liquid crystalline phases, and combinations thereof to function as associative agents. The term "water resistant" polymers refers to polymers prepared from one or more monomers having low or very low water solubility wherein the amount of such monomers, based on the total weight of monomers is between 80 to 99% by weight. An alternate meaning of the term "water resistant" polymers refers to polymers having a water solubility at 25°-50°C of no greater than about 200 millimoles/liter. The reaction of one or more monomers with one or more associative agents or with monomers incorporating associative agents as functional groups during or after polymerization affords water resistant polymers having a network structure and having a water solubility at 25°-50°C of no greater than 200 millimoles/liter. Moreover, terpolymers, tetrapolymers and polymers including more than four different monomers prepared according to the invention have a water solubility at 25°-50°C of no greater than about 200 millimoles/liter.

Optional monomers having water solubility useful in the invention include, but are not limited to, α,β-monoethylenically unsaturated monomers containing acid-functionality. Suitable examples include for example monomers containing at least one carboxylic acid group such as acrylic acid (AA) and methacrylic acid (MAA), (meth)acryloxypropionic acid, itaconic acid, maleic acid or anhydride, fumaric acid, crotonic acid, monoalkyl maleates, monoalkyl fumarates, monoalkyl itaconates; acid substituted (meth)acrylates and sulfoethyl methacrylate; acid substituted (meth)acrylamides such as 2-acrylamido-2-methylpropylsulfonic acid; basic substituted (meth)acrylates and (meth)acrylamides, such as amine-substituted methacrylates including dimethylaminoethyl methacrylate, tertiary-butylaminoethyl methacrylate and dimethylaminopropyl methacrylamide and the like; acrylonitrile; (meth)acrylamide and substituted (meth)acrylamides, such as diacetone acrylamide; (meth)acrolein; methyl acrylate and the like.

Polymers usefully employed according to the invention can be prepared by conventional emulsion, solution or suspension polymerization, including those processes for example disclosed in U. S. Patent Nos. 4,427,836; 4,469,825; 4,594,363; 4,677,003; 4,910,229; 4,920,160; 5,157,084; 5,521,266 and European Patent Nos. EP 0 267,726; EP 0 331,421 and EP 0 915,108. Emulsion polymerization is preferred. Monomers used to prepare the polymers are added in a sequential process or randomly to afford non-random or random polymers.

In a separate embodiment, polymers usefully employed in the present invention are prepared as an aqueous emulsion of polymerized monomer units, at least one monomer having low water solubility, including the steps of (1) complexing at least one monomer having low water solubility with a macromolecular organic compound having a hydrophobic cavity and (2) polymerizing in an aqueous system from about 0.1 % to about 100 % by weight of the monomer component, based on the total weight of the polymer, of the complexed monomer having low water solubility with from about 0 % to about 99.9 % by weight, based on the total weight of polymer of at least one monomer having high water solubility; as described in detail in U. S. Patent Nos. 4,797,223; 4,404,309; 5,008,329, 5,521,266; 6,040,409 6,063,857 and European publication EP 0 989 163 A1.

Suitable macromolecular organic compounds having a hydrophobic cavity useful in the polymerization method used in the present invention include, for example, cyclodextrin and cyclodextrin derivatives; cyclic oligosaccharides having a hydrophobic cavity such as cycloinulohexose, cycloinuloheptose, and cycloinuloctose; calixarenes; and cavitands. Suitable cyclodextrin and cyclodextrin derivatives useful in the method are limited only by the solubility of the cyclodextrin and cyclodextrin derivative selected under the particular polymerization conditions. Suitable cyclodextrins useful in the method include, but are not limited to, α-cyclodextrin, β-cyclodextrin and γ-cyclodextrin as well as the methyl, triacetyl hydroxypropyl and hydroxyethyl derivatives of α-cyclodextrin, β-cyclodextrin and γ-cyclodextrin. The preferred cyclodextrin derivative is methyl-β-cyclodextrin. Suitable cyclic oligosaccharides having a hydrophobic cavity, such as cycloinulohexose, cycloinuloheptose, useful in the method are described by Takai et al., Journal of Organic Chemistry, 1994, volume 59, number 11, pages 2967-2975. Suitable calixarenes useful in the method are described in U.S. Pat. No. 4,699,966, International Patent Publication WO 89/08092 and Japanese patent publications 1988/197544 and 1989/007837. Suitable cavitands useful in the method are described in Italian application 22522 A/89 and Moran et al., Journal of the American Chemical Society, volume 184, 1982, pages 5826-5828.

A preferred process for preparing aqueous emulsions of the water resistant, active retaining polymers of the present invention includes providing one or more ethylenically unsaturated monomers having low or very low water solubility, one or more water soluble monomers, one or more associative agents and a free radical redox initiator system under emulsion polymerization conditions. The preparation of blends of two or more water resistant polymers having network structures which retain active ingredients are also usefully employed in accordance with the present invention. The process is useful for polymerizing, in an aqueous system, solution polymers or emulsion polymers, preferably random polymers of monomers having low water solubility and network structures which could not be made without incorporating the use of organic solvents, co-monomers or high levels of surfactants to aid in solubilizing monomers having low water solubilities. The process is also useful for forming water resistant polymers having network structures by solution polymerization.

A free radical initiator is utilized in solution and emulsion polymerizations. Suitable free radical initiators include hydrogen peroxide; tert-butyl hydroperoxide; sodium, potassium, lithium and ammonium persulfate and the like. A reducing agent, such as a bisulfite, including an alkali metal metabisulfite, hydrosulfite, and hyposulfite; and sodium formaldehyde sulfoxylate or a reducing sugar such as ascorbic acid or isoascorbic acid, may be used in combination with the initiator to form a redox system. Initiators usefully employed for suspension polymerization include oil soluble peroxides, hydroperoxides and azo compounds such as AIBN. The amount of initiator may be from 0.01% by weight to about 2% by weight of the monomer charged and in a redox system, a corresponding range of 0.01% by weight to about 2% by weight of reducing agent may be used. Transition metal catalysts, such as iron and copper salts, may be used.

The polymerization temperature may be in the range of about 10° C to 120° C in the aqueous emulsion, suspension and solution polymerizations. In the case of the persulfate systems, the temperature is preferably in the range of 60° C to 90° C In the redox system, the temperature is preferably in the range of 20° C to 70° C.

For emulsion polymers, any emulsifiers or dispersing agents optionally employed for preparing the monomer emulsions or polymer emulsions may be anionic, cationic or non-ionic types. Also a mixture of any two or more types may be used. Suitable nonionic emulsifiers include, but are not limited to, ethoxylated octylphenols, ethoxylated nonylphenols, ethoxylated fatty alcohols and the like. Suitable anionic emulsifiers include, but are not limited to, sodium lauryl sulfate, sodium dodecylbenzene sulfonate, sulfated and ethoxylated derivatives of nonylphenols, octylphenols and fatty alcohols, esterified sulfosuccinates and the like. Suitable cationic emulsifiers include, but are not limited to, laurylpyridinium chlorides, cetyldimethylamine acetate, (C₈-C₁₈) alkyldimethylbenzylammonium chlorides and the like. The level of emulsifier may be from about 0.1% to about 10% by weight, based on total monomer charged.

The polymerization method is used in the present invention to form terpolymers, tetrapolymers and polymers including more than four monomers: two or more of the monomers having low water solubility, preferably affording random polymers, which heretofore could not be made without the addition of a solvent or surfactant to aid in solubilizing monomers of low or very low water solubility, also referred to as "hydrophobic monomers". "Random polymer," as used herein, refers to a polymer formed from at least two different monomers wherein the monomer units are arranged randomly not forming repeating blocks of monomer units. For an emulsion polymer, this lack of randomness and incorporation may be judged by:
(1) poor conversion of the monomer having low water solubility evidenced by monomer pooling around the stirrer shaft and the presence of monomer droplets in the final product; (2) high gel or coagulum levels; (3) the formation of large suspension polymer particles during an emulsion polymerization; (4) phase separation or creaming of monomer droplets or large suspension particles; and (5) abnormal (non-kinetic) distribution of the monomers having high water solubility and the monomers having low water solubility because of the non-uniform distribution during polymerization of the two types of monomers evidenced by multiple glass transition temperatures as measured by differential scanning calorimetry.

In an alternative embodiment, water resistant polymers formed by the polymerization method described in U. S. Patent No. 5,521,266 and usefully employed in the invention have a random arrangement of:
(a) about 1.0% to about 99.0% by weight, based on the total weight of the polymer, of one or more monomers having low or very low water solubility;
(b) about 0.01 to 0.5% by weight, based on the total weight of the polymer, of one or more associative agents that function via a direct cross-linking reaction and are added during or after polymerization or about 20 to 90% of one or more associative agents that function via a radically induced branching or internal cross-linking or polymerization or about 0.01 to 10% of at least one monomer having one or more associative agents as functional groups in addition to the ethylenically unsaturated group that function via chemical reactions such as condensation reactions and;
(c) optionally about 0.1% to about 9.9% by weight, based on the total weight of the polymer, of at least one monomer having water solubility;
wherein the random terpolymers, tetrapolymers and polymers including more than four monomers may be formed by either solution, suspension or emulsion polymerization in water without organic solvent or a high level of surfactant.

In a separate embodiment of the present invention the water resistant active retaining polymers may be prepared by a multistage emulsion polymerization process, in which at least two stages differing in composition are polymerized in sequential fashion. Such a process usually results in the formation of at least two mutually incompatible polymer compositions, thereby resulting in the formation of at least two phases within the polymer particles. Such particles are composed of two or more phases of various geometries such as, for example, core/shell or core/sheath particles, core/shell particles with shell phases incompletely encapsulating the core, core/shell particles with a multiplicity of cores, and interpenetrating network particles. In all of these cases the majority of the surface area of the particle will be occupied by at least one outer phase and the interior of the particle will be occupied by at least one inner phase. Each of the stages of the multi-staged emulsion polymer may contain the same monomers, surfactants, chain transfer agents, etc. as disclosed herein-above for the emulsion polymer. The polymerization techniques used to prepare such multistage emulsion polymers are well known in the art such as, for example, U. S. Patents Nos. 4,325,856; 4,654,397; and 4,814,373.

Water resistant polymers including one or more monomers having low or very low water solubility are useful in the invention where dispersibility or solubility in an oil phase is desired, such as methods of improving water resistance and film forming properties on hard surfaces including metals, plastic substrates and ceramic objects and the like as well as pliable surfaces such as plastic films, leather, mammalian skin and the like. Water resistant polymers incorporating one or more associative agents provide such polymers with network structures, which effectively retain active ingredients when dispersed in an oil phase at low polymer concentrations, namely 0.01 to 10% by polymer weight based on the total weight of the composition.

The active retaining polymer includes at least one associative agent, the associative agent providing a network structure to the polymer. The term "associative agent" refers to any composition that when combined with a monomer mixture during polymerization, a polymer after polymerization or any functional group incorporated in a monomer or polymer during or after polymerization that is capable of chemically modifying, changing, ordering or altering the resulting polymer structure or conformation, as compared to the resulting polymer in the absence of an associative agent, to provide a polymer having a network structure. One or more associative agents may be combined with the monomers during the polymerization process or may be added after the polymerization of monomers. In the present invention, the associative agents are:
allyl methacrylate (ALMA), ethylene glycol dimethacrylate (EGDMA), butylene glycol dimethacrylate (BGDMA), methylenebisacrylamide, pentaerythritol di-, tri- and tetra-acrylates, divinylbenzene, polyethylene glycol diacrylates, bisphenol A diacrylates and combinations thereof. Love levels of this associative agent are preferred, since levels greater than about 1% by weight, especially in combination with other types of associative agents (e.g. type c), based on the total weight of the polymer, tend to over cross-link the polymer network structure such that their effectiveness in retaining active ingredients markedly decreases. Preferred amounts of the associative agent range from 0.01 to 0.5% by weight, based on the total weight of the polymer.

Associative agent pairs are usefully employed in the invention. An example of a preferred associative agent pair is ALMA and butyl acrylate. The total amount of the associative agent is referred to as the degree or percent of network structure in the active retaining polymer. Occasionally, one or more of the monomer units can function as an associative agent during polymerization (e.g. alkyl acrylates such as butyl acrylate). Butyl acrylate is a monomer having a functional group capable of acting as an associative agent so that it can be considered as both a monomer having low water solubility and an associative agent, by virtue of a radically initiated cross-linking reaction it undergoes during polymerization. The associative agent provides the water resistant polymers of the invention a network structure, so that they are readily dispersed, soluble or swell in natural oils, synthetic oils, emollient oils and combinations thereof and retain active compounds at very low polymer dosages or concentrations in the oil phase, based on the total weight of the oil phase. In the absence of one or more associative agents, polymers formed from the same monomers are unable to retain active ingredients in an oil base.

In the present invention, the polymer comprises a) 0.1 to 5% by weight of polymerized residues of (meth)acrylic acid; b) 15 to 75% by weight B of polymerized residues of a monomer selected from one or more C₄-C₈ alkyl (meth)acrylates; c) 25 to 75% by weight of polymerized residues of a monomer selected from one or more C₉-C₅₀ alkyl (meth)acrylates; and d) 0.01 to 90% by weight of one or more associative agents.

Alkyl (meth)acrylates are monomers capable of acting as an associative agent so that it can be considered as both a monomer having low water solubility and an associative agent, by virtue of a radically initiated cross-linking reaction it undergoes during polymerization. The term "alkyl (meth)acrylate" refers to either the corresponding acrylate or methacrylate ester. Similarly, the term "(meth)acrylic" refers to either acrylic acid or methacrylic acid and its corresponding derivatives, such as esters or amides. "Ionic monomers" refer to monoethylenically unsaturated monomers which are preferably water soluble under the conditions of emulsion polymerization, as described in U.S. Patent No. 4,880,842. "Hydrophobic monomers" refer to monoethylenically unsaturated monomers which have low or very low water solubility under the conditions of emulsion polymerization, as described in U.S. Patent No. 5,521,266. Monomers suitable for preparing the active retaining polymer compositions and its use in the processes of the present invention are hydrophobic and ionic monoethylenically unsaturated monomers which can be subjected to free radical polymerization in a straight forward manner using standard emulsion polymerization techniques. The advantages of the water resistant active retaining polymers and its use in coating compositions and associated processes of the invention are achieved when the polymer composition includes relatively large amounts of monomers having low or very low water solubility compared to amounts of water soluble (ionic) monomers and include at least one associative agent or at least one monomer having a functional group that includes an associative agent in addition to the ethylenically unsaturated functional group. Active retaining polymers prepared by both methods are random polymers having a functional network structure.

Active retaining polymers usefully employed in accordance with present invention are combined with at least one active component in an oil phase or combined with other additives and formulated in an oil phase or an aqueous emulsion. The rheological or flow properties of the active retaining polymer and the active component in the oil phase are important. For example, the active retaining polymer in an oil based composition or oil based formulation should be effective in retaining the active component in an amount from 0.01 to 10% by weight based on the total weight of the composition or formulation in the oil phase. In a preferred embodiment, the amount of active retaining polymer is present in the oil phase in an amount from 0.01 to 5% by weight. In the most preferred embodiment, the active retaining polymer is present in the oil phase in an amount between 0.01 and 1%.

The active retaining polymer compositions or formulations in an oil phase exhibit significantly high viscosities (table II); oil phase viscosities of 10 poise or greater, under relatively low shear stresses, shear stresses ranging from 2.5 to 1000 dynes cm². Oil phase viscosity ranges from 10 poise to 100,000 poise for the active retaining polymer compositions or formulations under shear stresses ranging from 2.5 to 1000 dynes / cm². Oil phase viscosities for polymer compositions or formulations of the present invention are unexpectedly large as compared to the same rheological values for oil bases including for example neat oils, emollient oils with actives, polymers in oil bases, or acrylic based polymers combined with active ingredients in oil bases or formulated in to sunscreens or moisturizers, including polymers and formulations for example disclosed in U. S. Patent Nos. 5,736,125; 5,288,493; 5,219,558; 4,552,755 and 4,172,122. The latter polymer compositions or formulations exhibit markedly lower viscosities; oil phase viscosities lower than 10 poise under the same shear stress, shear stresses ranging from 2.5 to 1000 dynes / cm² (Table III). Under shear stresses of greater than 1000 dynes /cm², the active retaining polymer compositions or formulations of the present invention exhibit "shear thinning". Shear thinning means that as the polymer compositions or formulations are subjected to increasing shear, viscosity markedly decreases. Even under high shear stresses, however, the viscosities of the active retaining polymer compositions or formulations in the oil phase are still significantly higher as compared to oil bases including neat oils, emollient oils with actives, polymers in oil bases, or acrylic based polymers combined with active ingredients in oil bases or formulated in to sunscreens or moisturizers, including polymers and formulations for example disclosed in U. S. Patent Nos. 5,736,125; 5,288,493; 5,219,558; 4,552, 755 and 4,172,122.

The rheological values of active retaining polymer compositions and formulations in the oil phase were measured using a standard stress rheometer having a small cone angle. Details of the stress rheometer rheological measurements, and interpretation of rheological values are described by Christopher W. Macosko in "Rheology: Principles, Measurements and Applications, VCH Publishers: New York, 1994; the contents of which are usefully employed in the present invention. Shear stress sweep measurements were performed on active retaining oil based polymer compositions and formulations for comparison with emollient oils, emollient oils with actives, polymers in oil bases, or acrylic based polymers combined with active ingredients in oil bases or formulated in to sunscreens or moisturisers, including polymers and formulations described above. Oil phase viscosity data and shear stress data are summarised for representative active retaining polymer compositions and formulations of the present invention as Examples along with comparative examples. Viscosity data were measured for samples under shear stress levels generated such that the shear stresses are logarithmically incremented, resulting in equally spaced data points when viscosities are plotted as a function of the logarithmically scaled shear stresses. Shear stress sweep measurements were conducted over five decades of shear stress from 2.5 to 10,000 dynes / cm²

The active retaining polymer compositions of the present invention may be emulsion polymers (latexes) having an average particle diameter that ranges from 20 nm to 1,000 nm, preferably from 100 nm to 600 nm. Particle sizes herein are those determined using a Brookhaven Model BI-90 particle sizer manufactured by Brookhaven Instruments Corporation, Holtsville NY, and polymer particle diameters are reported as "effective diameter". Also contemplated are multimodal particle size active retaining emulsion polymers wherein two or more distinct particle sizes of or very broad distributions are provided as described in U. S. Patent Nos. 5,340,858; 5,350,787; 5,352,720; 4,539,361 and 4,456,726. In addition, active retaining suspension polymers with particle sizes greater than 1000 nm are contemplated.

The active retaining polymer compositions of the present invention may be used as prepared (in slightly acidic form) or the acidic groups (~ 1 to 3%) may be neutralised to form salts containing carboxylate anions. Preferred alkali metal ions typically include sodium or potassium, alkaline earth metal cations such as magnesium and calcium, ammonium or tetraalkyl ammonium salts, such as tetra methyl ammonium, or organic amine salts, such as the salts of tri-C₁-C₄ alkylamines, hydroxyethylamines, mono- C₁-C₄ alkanolamines, di- C₁-C₄ alkanolamines and tri-C₁-C₄ alkanolamines, and mixtures thereof.

The invention provides water resistant coatings comprising one or more active retaining polymers dispersed in an acceptable oil base. A suitable oil base includes any oil or mixture of oils which are conventionally used in the art. Examples include saturated fatty esters and diesters, such as isopropyl palmitate, octyl palmitate, butyl stearate, isocetyl stearate, octadodecyl stearoyl stearate, diisopropyl adipate, dioctyl sebacate, paraffin oils, paraffin waxes, animal oils and vegetable oils such as mink oil, coconut oil, soybean oil, palm oil, corn oil, cocoa butter, sesame oil, lanolin oil, fatty alcohols such as stearyl alcohol, isostearyl alcohol, isocetyl alcohoL The oils listed are merely examples and are not intended to limit the invention in any way. In general, any hydrophobic material or mixtures thereof which are toxicologically safe may constitute the oil base of the present invention.

Coating compositions and formulations containing the active retaining polymers are of three basic compositions: oil dispersions, oil-in-water emulsions and water-in-oil emulsions. The oil dispersions are prepared by dispersing the active retaining polymers in the oil base with one or more active ingredients. The active retaining polymers are dispersed in an oil phase or are prepared as an aqueous suspension prior to preparing the final oil-in-water or water-in-oil emulsion. The polymers can be added in either phase at any stage in preparing the composition or formulation. Coating formulations are prepared by combining the active retaining polymer, an oil base, optionally including an aqueous phase, one or more active ingredients and optional additives by warming the mixture with slow agitation. The oil based coating compositions and formulations include from 0.01 to 10 % by weight of at least one active retaining polymer based on the total weight of the formulation. The acceptable oil base of the compositions and formulations may be solid or liquid, but the entire formulation is preferably fluid at the temperature of a particular surface for ease of application. Suitable solvents include alcohols such as methyl alcohol, ethyl alcohol and isopropyl alcohol, volatile silicones, acetone, petroleum distillates and the like. Suitable additives include fillers, dyes, colorants, preservatives, biocides, and other such additives conventionally used with out negatively impacting substantivity and combinations thereof.

The invention provides directly applied or sprayed on coating compositions and formulations including active retaining polymers dispersed in an oil base or solvent and one or more active ingredients. Suitable active ingredients include but are not limited to UV absorbing materials, biocides, antibacterial agents, insecticides, antifungal agents, antioxidants, waterproofing oils such as silicones and triglycerides, dyes, colorants, surfactants, surfactants, thickeners, fabric care actives, inks, agricultural chemicals including fungicides, pesticides and antibacterial agents, pharmaceutical agents and combinations thereof.

The coating compositions and formulations of the invention may be formed by simply mixing one or more active retaining polymers, actives, oil base and aqueous phase components using conventional, inexpensive agitation equipment. The coating compositions and formulations thus formed are stable, homogeneous dispersions, the polymers effectively retaining active ingredients at low polymer concentrations, ranging from 0.01 to 10% by polymer weight based on the total weight of the polymer in the oil phase; the oil phase viscosity of each composition or formulation is at least 10 poise under a shear stress up to 1000 dynes / cm².

The coating compositions and formulations of the invention are applied to a wide variety of hard, flexible and pliable surfaces including for example as metals, plastics, concrete, ceramics, glass, wood, leather products, mammalian skin, plastic films, trees, plants, textiles, paper, cardboard, roofing, siding, caulks, paints, sealants, architectural coatings and combinations thereof.

When applied to surfaces, the coatings of the present invention form an oil film on the surface. The films helps protect surfaces from moisture and the oxidizing effects of the environment, and the ultraviolet light-absorber protects the surface from the damaging rays of the sun. The polymer retains the active component(s) onto surfaces so that a significantly greater percentage of active(s) are provided at lower polymer concentrations after than with compositions not containing one or more active retaining polymers. Moreover the compositions and formulations remain substantive on surfaces for extended periods of time and prolonged exposure to aqueous environments such as fresh water, sea water and high humidity.

Coatings of the water-in-oil emulsion type generally contain between about 0.01 and 10 percent by weight of the active retaining polymer, with the preferred range being about 0.01 to 5 percent by weight.

The water-in-oil emulsions of the invention generally contain between 30 and 90 percent by weight of water. Although water is used in this system, the fact that the water evaporates is not an important feature of this invention. The film that is left behind on the surface in this system is an oil film identical to the film that is coated out from the oil system.

Water-in-oil emulsions are generally prepared by heating the oil and water phases, and slowly adding the water phase to the oil phase with good agitation. Homogenization may be helpful, but it is not necessary. The addition of low levels of stabilizing ingredients in the water phase has been shown to be helpful. Salts such as magnesium sulfate have proven to be useful emulsion stabilizers, and they do not significantly affect the water resistance of the formulations. The addition of water soluble gums such as guar derivatives, xanthan gum, and aloe vera and thickeners such as hydroxyethylcellulose, hydroxymethylcellulose and carboxyvinyl polymers have been found to be helpful in stabilizing the emulsions.

The coatings are usefully employed in accordance with the present invention as oil dispersions, emulsions, sprays delivered from solvent and any conventional means used in coatings art.

Coatings of the present invention can be usefully employed in the following embodiments:
One preferred embodiment is a water resistant coating that maintains one or more active components on the surface of a substrate. Active components include for example fat liquors, silicone oils, UV absorbing materials, biocides, insecticides, antibacterial agents, antifungal agents, antioxidants, waterproofing oils such as silicones and triglycerides, dyes, colorants, surfactants, thickeners, fabric care actives, inks, agricultural chemicals, pharmaceutical agents and combinations thereof. Coated surfaces include for example leather products, crops, agricultural equipment, automobiles, ceramics, plastic objects and films, metals, textiles, paper, architectural coatings and combinations thereof.

A separate preferred embodiment is a water resistant coating that retains active components within a porous structure by immobilizing the active component. For example, a water resistant coating that retains fat liquors, silicone oils and animal oils in leather garments. Water resistant polymers having a network structure (Examples 1-8) will be more reluctant to penetrate/permeate leather relative to the acrylic polymers having no network structure or organic oils components. Such a complex will then have a high probability to deposit on the leather surfaces to improve the performance of certain auxiliaries/additives. The following additives are preferred by tanners to sit on/close to the surfaces of the leather substrate to maximize their properties:
a) One or more dyestuffs to enhance, darken, and deepen the shade and or color of leather.
b) UV absorber materials in combination with one or more dyestuffs for maintaining the brilliance of the dye and providing minimal fading for a longer service life of the leather.
c) One or more colored pigments comprising organic and inorganic compounds.
d) One or more hollow sphere pigments normally used in leather to replace TiO₂; but in normal application they also penetrate therein and do not preferentially deposit on the surface for maximum whitening of leather.
e) One or more fluorocarbon stain repellents.
f) One or more fat liquors for increased water resistance.
g) One or more fungicides including for example isothiazolones such as Kathon®.

The above 7 applications pre-suppose the preparation of a blend of water resistant active retaining polymers and active ingredients prior to leather application. One can further expand the utility/flexibility of this invention by sequentially depositing said ingredients in/on leather such that the assembly of the water resistant active retaining polymers and active ingredients happens therein the leather matrix. Since new structures/complexes will be formed in the leather matrix, it follows that new leather properties will emerge. An example outcome will be the suppression of volatiles/fog as it pertains to vehicular upholstery.

A separate preferred embodiment is a water resistant coating that retards one or more plasticizers from migrating from the surface of substrates.

A separate preferred embodiment is a water resistant coating that maintains the rain fastness of small molecules on the surface of agricultural substrates.

An alternate embodiment is a water resistant coating that maintains the fastness of antifungal or antibacterial compounds on mammalian skin, preventing sub-surface penetration of fungi, microorganisms and irritants.

A separate preferred embodiment is a water resistant coating for applying to flexible or hard substrates including films and objects comprising plastics such as for example polyethylene and polypropylene.

A separate preferred embodiment is a water resistant coating that retains silicone oils and UV absorbing materials on convertible tops and textiles exposed to sunlight and atmospheric conditions. Such coatings are useful as well in automobile waxes, tires and plastic interiors having improved rain fastness and UV substantivity.

A separate preferred embodiment is a water resistant coating that provides controlled release of biocidal actives or partial immobilization of biocidal actives.

A separate preferred embodiment is a water resistant coating that maintains rheology control in surface coating processes. Such coatings provide a new type of printing additive preventing moisture and bleaching agents such as sunlight from penetrating into paper. In addition, the coatings maintain the integrity of ink droplets in high speed printing and provide improve water and ink fastness in ink-jet processes.

A separate embodiment is a water resistant coating containing a network forming polymer that slows down or controls the penetration of pharmaceutical ingredients into the skin.

A separate embodiment is a water resistant coating containing a perfume where the release of perfume into the environment is controlled through use of the network forming polymer.

A separate embodiment is a water resistant polymer that functions as a thickener for hydrophobic liquids including for example silicone oil, paraffin oils, vegetable oils, triglycerides, fatty alcohols, fatty esters and combinations thereof.

A separate embodiment is a water resistant coating containing a biocide where the release of the biocide into the environment is controlled through use of the network forming polymer.

The following examples illustrate specific aspects and particular embodiments of the invention which, however, are not to be construed as limited thereby.

The following abbreviations are used in the examples:

| | |
|---|---|
| BA | butyl acrylate |
| MMA | methyl methacrylate |
| MAA | methacrylic acid |
| AA | acrylic acid |
| SMA | stearyl methacrylate |
| CEMA | cetyl-eicosyl methacrylate |
| ALMA | allyl methacrylate |
| g | grams |
| nm | nanometers |
| OP | octyl palmitate |
| IOA | isooctyl acrylate |
| IPP | isopropyl palmitate |

### WATER RESISTANT, ACTIVE RETAINING POLYMER COMPOSITIONS

### EXAMPLES 1-8

A standard emulsion polymerization method was used to prepare examples 3 and 7 and comparative examples. The emulsion polymerizations were carried out in a 4-liter round bottom flask with four necks equipped with a mechanical stirrer, temperature control device, condenser, monomer and initiator feed lines and a nitrogen inlet. The monomer emulsion and initiator solutions were fed over a period of three hours maintaining the temperature at 75 °C.

Table I summarizes typical water resistant, active retaining polymer compositions usefully employed in accordance with the present invention.

**TABLE I. Water Resistant, Active Retaining Polymer Compositions**

| Example # | Composition (by weight %) |
|---|---|
| 1 C | 40SMA/20BA/39MMA/1MAA |
| 2 C | 31CEMA/49BA/19MMA/1MAA |
| 3 | 31CEMA/49BA/18.98MMA/1MAA/0.02ALMA |
| 4 C | 31CEMA/49BA/19MMA/1AA |
| 5 C | 31CEMA/31BA/36.6MMA/1.4MAA |
| 6 C | 31 CEMA/49BA/18.6MMA/1.4MAA |
| 7 | 40SMA/20BA/38.95MMA/1MAA/0.05ALMA |
| 8 C | 70BA/28MMA/1.5MAA/0.5ALMA |
| 9 C | None |

| | |
|---|---|
| C= comparative | |

### Characterization of Water Resistant, Active Retaining Emulsion Polymers

Several techniques were used to determine whether the monomers having very low water solubility of Examples 1-8 were incorporated randomly into the final polymer. First, lack of pooling of monomer having very low water solubility around the stirring vortex was evidence of good conversion of the monomer having very low water solubility into the final polymer. Second, lack of large 1-10 microns particles and monomer droplets, collected (as is or by centrifugation or from creamy layer) and characterized by optical microscopy, was evidence of good incorporation of the monomer having very low water solubility into the final polymer. Third, lack of formation of gel (collected through a 100 mesh screen) was evidence that the polymerization generally ran well. Finally, a single glass transition temperature at approximately the calculated copolymer values using literature data, as measured by differential scanning calorimetry at a heating rate of 20 °C/minute, was evidence of good incorporation of the monomer having very low water solubility to form a random copolymer.

### PREPARATION OF OIL PHASE USED FOR OIL PHASE RHEOLOGY MEASUREMENTS OF WATER RESISTANT, ACTIVE RETAINING POLYMERS

An oil phase containing 0.5 g of a water resistant, active retaining polymer (freeze dried) and the following additives:
7.5g Octyl Methoxycinnamate (OMC)
3.0g Benzophenone-3
3.0g Octyl Salicylate
6.0g Octyl Palmitate
were combined with stirring and heated to 70-75 °C until the polymer had completely swelled into the oil phase. The time required for swelling the polymer in to the oil phase depended on the amount and particle size of the freeze dried polymer used. Small polymer particles were made by grinding freeze dried polymer prior to addition to the oil phase.

The maximum viscosity for each water resistant, active retaining polymer of the current invention from the above plot is summarized in Table II.

**TABLE II. Maximum Oil Phase Viscosities of the Water Resistant, Active Retaining Polymer Compositions**

| Example # | Viscosity, P |
|---|---|
| 1 C | 9400 |
| 2 C | 3100 |
| 3 | 11000 |
| 4 C | 8100 |
| 5 C | 990 |
| 6 C | 1040 |
| 7 | 27 |
| 8 C | 12 |
| 9 C | 0.27 |

| | |
|---|---|
| C=comparative | |

As shown in Table II, all of the water resistant, active retaining polymers of the current invention have a maximum viscosity of greater than 10 poise under a shear stress up to 1000 dynes / cm².

## Claims

1. A water resistant, coating composition comprising:
(A) 0.01 to 10% by weight, based on the total weight of the composition of one or more active components selected from the group consisting of ultraviolet light-absorbing materials, fragrances, lubricants, corrosion inhibitors, silicones, plasticizers, rheology modifiers, surfactants, surfactant scavengers, sag resistors, pharmaceutical agents, antibacterial agents, insecticides, antifungal agents, antioxidants, waterproofing oils, silicones, triglycerides, thickeners, fabric care actives, inks, agricultural chemicals, fungicides, pesticides and combinations thereof;
(B) one or more acceptable additives selected from fillers, dyes, colorants, preservatives, biocides and combinations thereof;
(C) an oil phase ; and
(D) one or more polymers having a network structure and comprising
a) 0.1 to 5% by weight of polymerized residues of (meth)acrylic acid;
b) 15 to 75% by weight of polymerized residues of a monomer selected from one or more C₄-C₈ alkyl (meth)acrylates;
c) 25 to 75% by weight of polymerized residues of a monomer selected from one or more C₉-C₅₀ alkyl (meth)acrylates; and
d) 0.01 to 90% by weight of one or more associative agents,
the polymer dispersing in the oil phase in an amount from 0.01 to 10% by weight based on the total weight of the composition,
wherein the associative agents are selected from the group consisting of allyl (meth)acrylate, ethylene glycol di(meth)acrylate, butylene glycol di(meth)acrylate, methylenebisacrylamide, pentaerythritol diacrylate, pentaerythritol triacrylate, pentaerythritol tetraacrylate, divinylbenzene, polyethylene glycol diacrylate, bisphenol A diacrylates and combinations thereof;
and wherein the oil phase viscosity of the composition is at least 10 poise under a shear stress up to 1000 dynes / cm².

2. A process for retaining an active component in a coating composition comprising:
(i) adding a mixture comprising
a) 0.1 to 5% by weight of polymerizes residues of (meth)acrylic acid;
b) 15 to 75% by weig ht of polymerized residues of a monomer selected from one or more C₄-C₈ alkyl (meth)acrylates;
c) 25 to 75% by weight of polymerized residues of a monomer selected from one or more C₉-C₅₀ alkyl (meth)acrylates; and
d) 0.01 to 90% by weight of one or more associative agents, and wherein the associative agents are selected from the group consisting of allyl (meth)acrylate, ethylene glycol di(meth)acrylate, butylene glycol di(meth)acrylate, methylenebisacrylamide, pentaerythritol diacrylate, pentaerythritol triacrylate, pentaerythritol tetraacrylate, divinylbenzene, polyethylene glycol diacrylate, bisphenol A diacrylates and combinations thereof,
and polymerizing the mixture to form a polymer having a network structure; and
(ii) combining the polymer and 0.01 to 10% by weight, based on the total weighty of the composition of one or more active components selected from the group consisting of ultraviolet light-absorbing materials, fragrances, lubricants, corrosion inhibitors, silicones, plasticizers, rheology modifiers, surfactants, surfactant scavengers, sag resistors, pharmaceutical agents, biocides, antibacterial agents, insecticides, antifungal agents, antioxidants, waterproofing oils, silicones, triglycerides, dyes, colorants, thickeners, fabric care actives, inks, agricultural chemicals, fungicides, pesticides and combinations thereof in an oil phase; wherein the polymer is dispersed in the oil phase in an amount from 0.01 to 10% by weight based on the total weight of the composition; wherein the oil phase viscosity of the composition is at least 10 poise under a shear stress up to 1000 dynes cm².

3. The coating of claim 1 when applied to surfaces selected from the group consisting of metals, plastics, concrete, ceramics, glass, wood, leather products, mammalian skin, plastic films, trees, plants, textiles, paper, cardboard, roofing, siding, caulks, paints, sealants, architectural coatings and combinations thereof.

## Patentansprüche

1. Wasserbeständige Beschichtungszusammensetzung, umfassend:
(A) 0,01 bis 10 Gew.-%, bezogen auf das Gesamtgewicht der Zusammensetzung, von einer oder mehreren aktiven Komponente(n), ausgewählt aus der Gruppe, bestehend aus Ultraviolettlicht-absorbierenden Materialien, Duftstoffen, Schmierstoffen, Korrosionsinhibitoren, Siliconen, Weichmachern, Rheologiemodifizierungsmitteln, grenzflächenaktiven Mitteln, Grenzflächenmittel-Reinigungsmittel, Durchhangwiderstandsmitteln, pharmazeutischen Mitteln, antibakteriellen Mitteln, Insektiziden, Antipilzmitteln, Antioxidantien, Wasserfestölen, Siliconen, Triglyceriden, Verdickungsmitteln, Gewebeschutzmitteln, Tinten, Agrarchemikalien, Fungiziden, Pestiziden und Kombinationen davon,
(B) ein oder mehrere verträgliche(s) Additiv(e), ausgewählt aus Füllstoffen, Farbstoffen, Färbemitteln, Konservierungsstoffen, Bioziden und Kombinationen davon,
(C) eine Ölphase, und
(D) ein oder mehrere Polymer(e) mit einer Netzwerkstruktur und umfassend
a) 0,1 bis 5 Gew.-% polymerisierte Reste von (Meth)acrylsäure,
b) 15 bis 75 Gew.-% polymerisierte Reste eines Monomers, ausgewählt aus einem oder mehreren C₄-C₈-Alkyl(meth)acrylat(en),
c) 25 bis 75 Gew.-% polymerisierte Reste eines Monomers, ausgewählt aus einem oder mehreren C₉-C₅₀ Alkyl(meth)acrylat(en) und
d) 0,01 bis 90 Gew.-% von einem oder mehreren Assoziationsmitteln,
wobei das Polymer, welches in der Ölphase dispergiert ist, in einer Menge von 0,01 bis 10 Gew.-%, bezogen auf das Gesamtgewicht der Zusammensetzung, vorliegt,
wobei die Assoziationsmittel ausgewählt sind aus der Gruppe, bestehend aus Allyl(meth)acrylat, Ethylenglycoldi(meth)acrylat, Butylenglycoldi(meth)acrylat, Methylenbisacrylamid, Pentaerythritoldiacrylat, Pentaerythritoltriacrylat, Pentaerythritoltetraacrylat, Divinylbenzol, Polyethylenglycoldiacrylat, Bisphenol-A-Diacrylate und Kombinationen davon,
und wobei die Ölphasenviskosität der Zusammensetzung mindestens 10 Poise unter einer Scherspannung von bis zu 1000 Dynes/cm² beträgt.

2. Verfahren zum Beibehalten einer aktiven Komponente in einer Beschichtungszusammensetzung, umfassend:
(i) Zugeben eines Gemischs, umfassend
a) 0,1 bis 5 Gew.-% polymerisierte Reste von (Meth)acrylsäure,
b) 15 bis 75 Gew.-% polymerisierte Reste eines Monomers, ausgewählt aus einem oder mehreren von C₄-C₈ Alkyl(meth)acrylat(en),
c) 25 bis 75 Gew.-% polymerisierte Reste eines Monomers, ausgewählt aus einem oder mehreren C₉-C₅₀ Alkyl(meth)acrylat(en) und
d) 0,01 bis 90 Gew.-% von einem oder mehreren Assoziationsmittel(n) und wobei die Assoziationsmittel ausgewählt sind aus der Gruppe, bestehend aus Allyl(meth)acrylat, Ethylenglycoldi(meth)acrylat, Butylenglycoldi(meth)acrylat, Methylenbisacrylamid, Pentaerythritoldiacrylat, Pentaerythritoltriacrylat, Pentaerithritoltetraacrylat, Divinylbenzol, Polyethylenglycoldiacrylat, Bisphenol-A-Diacrylate und Kombinationen davon,
und Polymerisieren des Gemischs, um ein Polymer mit einer Netzwerkstruktur zu bilden, und
(ii) Kombinieren des Polymers und 0,01 bis 10 Gew.-%, bezogen auf das Gesamtgewicht der Zusammensetzung, von einer oder mehreren aktiven Komponente(n), ausgewählt aus der Gruppe, bestehend aus Ultraviolettlicht-absorbierenden Materialien, Durftstoffen, Schmiermitteln, Korrosionsinhibitoren, Siliconen, Weichmachern, Rheologiemodifizierungsmitteln, grenzflächenaktiven Mitteln, Grenzflächenmittel-Reinigungsmittel, Durchhangwiderstandsmitteln, pharmazeutischen Mitteln, Bioziden, antibakteriellen Mitteln, Insektiziden, Antipilzmitteln, Antioxidanzien, Wasserfestölen, Siliconen, Triglyceriden, Farbstoffen, Färbemitteln, Verdickungsmittel, Gewebeschutzmitteln, Tinten, Agrarchemikalien, Fungiziden, Pestiziden und Kombinationen davon, in einer Ölphase,
wobei das Polymer in der Ölphase in einer Menge von 0,01 bis 10 Gew.-%, bezogen auf das Gesamtgewicht der Zusammensetzung, dispergiert wird, wobei die Ölphasenviskosität der Zusammensetzung mindestens 10 Poise unter einer Scherspannung von bis zu 1000 Dynes/cm² beträgt.

3. Beschichtung nach Anspruch 1, (wenn) aufgetragen auf Oberflächen, ausgewählt aus der Gruppe, bestehend aus Metallen, Kunststoffen, Beton, Keramiken, Glas, Holz, Lederprodukte, Säugetierhaut, Kunststoff-Filme, Bäume, Pflanzen, Textilien, Papier, Karton bzw. Pappe, Dachbedeckung, Seitenwand, Dichtungen bzw. Dichtungsmaterialien, Anstrichen, Dichtungsmitteln, Architekturbeschichtungen und Kombinationen davon.

## Revendications

1. Composition de revêtement, résistant à l'eau comprenant :
(A) 0,01 à 10 % en poids, sur la base du poids total de la composition, d'un composant actif ou plus choisi dans le groupe consistant en les matériaux absorbant la lumière ultraviolette, les fragrances, les lubrifiants, les inhibiteurs de corrosion, les silicones, les plastifiants, les modificateurs de rhéologie, les agents tensioactifs, les désactivateurs d'agent tensioactif, les agents de résistance au relâchement, les agents pharmaceutiques, les agents antibactériens, les insecticides, les agents antifongiques, les antioxydants, les huiles imperméabilisantes, les triglycérides, les épaississants, les agents actifs de soin des étoffes, les encres, les produits agrochimiques, les fongicides, les pesticides et les combinaisons de ceux-ci ;
(B) un additif acceptable ou plus choisi parmi les charges, les teintes, les colorants, les agents de conservation, les biocides et les combinaisons de ceux-ci;
(C) une phase huileuse ; et
(D) un polymère ou plus ayant une structure réticulaire et comprenant
a) 0,1 à 5 % en poids de résidus polymérisés d'acide (méth)acrylique ;
b) 15 à 75 % en poids de résidus polymérisés d'un monomère choisi parmi un ou plus (méth)acrylates d'alkyle en C₄ à C₈ ;
c) 25 à 75 % en poids de résidus polymérisés d'un monomère choisi parmi un ou plus (méth)acrylates d'alkyle en C₉ à C₅₀ ; et
d) 0,01 à 90 % en poids d'un agent associatif ou plus,
le polymère se dispersant dans la phase huileuse en une quantité de 0,01 à 10 % en poids sur la base du poids total de la composition,
dans laquelle les agents associatifs sont choisis dans le groupe consistant en le (méth)acrylate d'allyle, le di(méth)acrylate d'éthylène glycol, le di(méth)acrylate de butylène glycol, le méthylènebisacrylamide, le diacrylate de pentaérythritol, le triacrylate de pentaérythritol, le tétraacrylate de pentaérythritol, le divinylbenzène, le poly(diacrylate d'éthylène glycol), les diacrylates de bisphénol A et les combinaisons de ceux-ci ;
et dans laquelle la viscosité de phase huileuse de la composition est d'au moins 1 pascal-seconde (10 poises) sous une contrainte allant jusqu'à 1 000 dynes/cm².

2. Procédé pour retenir un composant actif dans une composition de revêtement comprenant :
(i) l'ajout d'un mélange comprenant
a) 0,1 à 5 % en poids de résidus polymérisés d'acide (méth)acrylique ;
b) 15 à 75 % en poids de résidus polymérisés d'un monomère choisi parmi un ou plus (méth)acrylates d'alkyle en C₄ à C₈ ;
c) 25 à 75 % en poids de résidus polymérisés d'un monomère choisi parmi un ou plus (méth)acrylates d'alkyle en C₉ à C₅₀ ; et
d) 0,01 à 90 % en poids d'un agent associatif ou plus, et où les agents associatifs sont choisis dans le groupe consistant en le (méth)acrylate d'allyle, le di(méth)acrylate d'éthylène glycol, le di(méth)acrylate de butylène glycol, le méthylènebisacrylamide, le diacrylate de pentaérythritol, le triacrylate de pentaérythritol, le tétraacrylate de pentaérythritol, le divinylbenzène, le poly(diacrylate d'éthylène glycol), les diacrylates de bisphénol A et les combinaisons de ceux-ci,
et la polymérisation du mélange pour former un polymère ayant une structure réticulaire ; et
(ii) la combinaison du polymère et de 0,01 à 10 % en poids, sur la base du poids total de la composition, d'un composant actif ou plus choisi dans le groupe consistant en les matériau absorbant la lumière ultraviolette, les fragrances, les lubrifiants, les inhibiteurs de corrosion, les silicones, les plastifiants, les modificateurs de rhéologie, les agents tensioactifs, les désactivateurs d'agent tensioactif, les agents de résistance au relâchement, les agents pharmaceutiques, les biocides, les agents antibactériens, les insecticides, les agents antifongiques, les antioxydants, les huiles imperméabilisantes, les silicones, les triglycérides, les teintes, les colorants, les épaississants, les agents actifs de soin d'étoffes, les encres, les produits agrochimiques, les fongicides, les pesticides et les combinaisons de ceux-ci dans une phase huileuse ; dans lequel le polymère est dispersé dans la phase huileuse en une quantité de 0,01 à 10 % en poids sur la base du poids total de la composition ; dans lequel la viscosité de phase huileuse de la composition est d'au moins 1 pascal-seconde (10 poises) sous une contrainte de cisaillement allant jusqu'à 1 000 dynes/cm².

3. Revêtement selon la revendication 1, lorsqu'il est appliqué aux surfaces choisies dans le groupe consistant en les métaux, les matières plastiques, le béton, les céramiques, le verre, le bois, les produits en cuir, la peau de mammifère, les films plastiques, les arbres, les plantes, les textiles, le papier, le carton, les matériaux de couverture, le bardage, les produits de calfeutrage, les peintures, les mastics, les revêtements architecturaux et les combinaisons de ceux-ci.
